# FASCICULE DE BREVET EUROPEEN

(11) **EP 2 170 769 B1**
(45) Date de publication et mention de la délivrance du brevet: **30.03.2011**
(21) Numéro de dépôt: 08805573.6
(22) Date de dépôt: 14.05.2008
(51) Int. Cl.: C01B 39/48, B01J 20/18

(54) **SOLIDE CRISTALLISE IZM-2 ET SON PROCÉDÉ DE PRÉPARATION**
KRISTALLINER FESTSTOFF IZM-2 UND HERSTELLUNGSVERFAHREN DAFÜR
CRYSTALLINE SOLID IZM-2 AND METHOD FOR THE PREPARATION THEREOF

(30) Priorité: 29.06.2007 FR 0704704
(43) Date de publication de la demande: 07.04.2010
(73) Titulaire: IFP Energies nouvelles, 92852 Rueil-Malmaison Cedex (FR)
(72) Inventeur: FECANT, Antoine, F-69530 Brignais (FR); BATS, Nicolas, F-69320 Feyzin (FR)
(86) Numéro de dépôt international: PCT/FR2008/000675
(87) Numéro de publication internationale: WO 2009/004131

(56) Documents cités:
- EP-A- 1 702 888
- US-A- 4 397 827
- US-A- 4 539 193

## Description

### Domaine technique

La présente invention se rapporte à un nouveau solide microporeux cristallisé appelé ci-après IZM-2, au procédé de préparation dudit solide ainsi qu'à l'utilisation dudit solide comme adsorbant ou agent de séparation.

### Art antérieur

Les matériaux microporeux cristallisés, tel que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.

Les aluminosilicates microporeux sont généralement préparés à partir d'un mélange réactionnel aqueux contenant des cations alcalins ou alcalino-terreux, des espèces organiques telles que des amines ou des amoniums quaternaires, des oxydes métalliques, du silicium et de l'aluminium.

### Description de l'invention

La présente invention a pour objet un nouveau solide cristallisé, appelé solide cristallisé IZM-2, présentant une nouvelle structure cristalline. Ledit solide présente une composition chimique exprimée sur une base anhydre, en termes de moles d'oxydes, par la formule générale suivante : XO₂ : aY₂O₃ : bM_{2/n}O dans laquelle X représente au moins un élément tétravalent, Y représente au moins un élément trivalent et M est au moins un métal alcalin et/ou un métal alcalino-terreux de valence n, a et b représentant respectivement le nombre de moles de Y₂O₃ et M_{2/n}O et a est compris entre 0 et 0,5 et b est compris entre 0 et 1.

Le solide cristallisé IZM-2 selon l'invention présente un diagramme de diffraction de rayons X incluant au moins les raies inscrites dans le tableau 1. Ce nouveau solide cristallisé IZM-2 présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IZM-2 selon l'invention comporte au moins les raies aux valeurs de dₕₖₗ données dans le tableau 1. Dans la colonne des dₕₖₗ, on a indiqué les valeurs moyennes des distances inter-réticulaires en Angströms (Å). Chacune de ces valeurs doit être affectée de l'erreur de mesure A(dₕₖₗ) comprise entre ± 0,6Å et ± 0,01Å.

**Tableau 1 : Valeurs moyennes des dₕₖₗ et intensités relatives mesurées sur un diagramme de diffraction de rayons X du solide cristallisé IZM-2 calciné**

| 2 thêta (°) | dₕₖₗ (Å) | Iᵣₑₗ | 2 thêta (°) | dₕₖₗ (Å) | Iᵣₑₗ |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

où FF = très fort ; F = fort ; m = moyen ; mf = moyen faible ; f = faible ; ff = très faible. L'intensité relative Iᵣₑₗ est donnée en rapport à une échelle d'intensité relative où il est attribué une valeur de 100 à la raie la plus intense du diagramme de diffraction des rayons X : ff < 15 ; 15 ≤ f < 30 ; 30 ≤ mf < 50 ; 50≤ m < 65 ; 65≤ F < 85 ; FF ≥ 85.

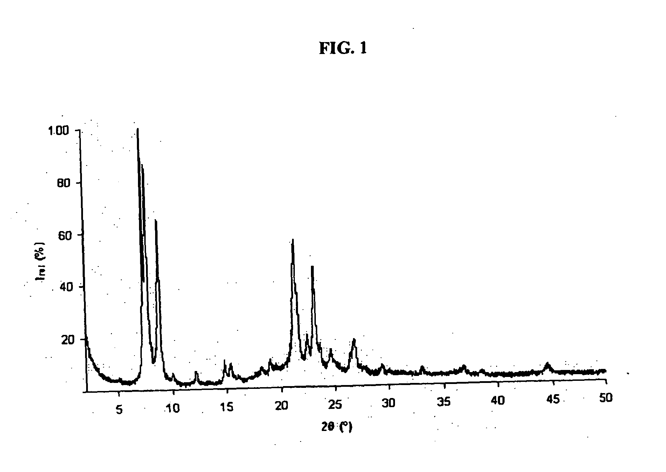

Le solide cristallisé IZM-2 selon l'invention présente une nouvelle structure cristalline de base ou topologie qui est caractérisée par son diagramme de diffraction X sous la forme calcinée donné par la figure 1.

Ledit solide IZM-2 présente une composition chimique exprimée sur une base anhydre, en termes de moles d'oxydes, définie par la formule générale suivante : XO₂ aY₂O₃ bM_{2/n}O, dans laquelle représente au moins un élément tétravalent, Y représente au moins un élément trivalent et M est au moins un métal alcalin et/ou un métal alcalino-terreux de valence n. Dans ladite formule donnée ci-dessus, a représente le nombre de moles de Y₂O₃ et a est compris entre 0 et 0,5, très préférentiellement compris entre 0 et 0,05 et de manière encore plus préférée entre et 0,0016 et 0,02 et b représente le nombre de moles de M_{2/n}O et est compris entre 0 et 1, de préférence entre 0 et 0,5 et de manière encore plus préférée entre 0,005 et 0,5.

Conformément à l'invention, X est préférentiellement choisi parmi le silicium, le germanium, le titane et le mélange d'au moins deux de ces éléments tétravalents, très préférentiement X est le silicium et Y est préférentiellement choisi parmi l'aluminium, le bore, le fer, l'indium et le gallium, très préférentiellement Y est l'aluminium. M est préférentiellement choisi parmi le lithium, le sodium, le potassium, le calcium, le magnésium et le mélange d'au moins deux de ces métaux et très préférentiellement M est le sodium. De manière préférée, X représente le silicium, le solide cristallisé IZM-2 selon l'invention est alors un solide entièrement silicique lorsque l'élément Y est absent de la composition dudit solide IZM-2. Il est également avantageux d'employer comme élément X un mélange de plusieurs éléments X, en particulier un mélange de silicium avec un autre élément X choisi parmi le germanium et le titane, de préférence le germanium. Ainsi, lorsque le silicium est présent en mélange avec un autre élément X, le solide cristallisé IZM-2 selon l'invention est alors un métallosilicate cristallisé présentant un diagramme de diffraction des rayons X identique à celui décrit dans le tableau 1 lorqu'il se trouve sous sa forme calcinée. De manière encore plus préférée et en présence d'un élément Y, X étant le silicium et Y étant l'aluminium : le solide cristallisé IZM-2 selon l'invention est alors un aluminosilicate cristallisé présentant un diagramme de diffraction des rayons X identique à celui décrit dans le tableau 1 lorsqu'il se trouve sous sa forme calcinée.

D'une manière plus générale, ledit solide IZM-2 selon l'invention présente une composition chimique exprimée par la formule générale suivante : XO₂ : aY₂O₃ : bM_{2/n}O : cR : dH₂O dans laquelle R représente une espèce organique comportant deux atomes d'azote quaternaires, X représente au moins un élément tétravalent, Y représente au moins un élément trivalent et M est un métal alcalin et/ou un métal alcalino-terreux de valence n ; a, b, c et d représentant respectivement le nombre de moles de Y₂O₃, M_{2/n}O, R et H₂O et a est compris entre 0 et 0,5, b est compris entre 0 et 1, c est compris entre 0 et 2 et d est compris entre 0 et 2. Cette formule et les valeurs prises par a, b, c et d sont celles pour lesquelles ledit solide IZM-2 se trouve préférentiellement sous sa forme calcinée.

Plus précisément, ledit solide IZM-2, sous sa forme brute de synthèse, présente une composition chimique exprimée par la formule générale suivante : XO₂ : aY₂O₃ : bM_{2/n}O : cR : dH₂O (I) dans laquelle R représente une espèce organique comportant deux atomes d'azote quaternaires, X représente au moins un élément tétravalent, Y représente au moins un élément trivalent et M est un métal alcalin et/ou un métal alcalino-terreux de valence n ; a, b, c et d représentant respectivement le nombre de moles de Y₂O₃, M_{2/n}O, R et H₂O et a est compris entre 0 et 0,5, b est compris entre 0 et 1, c est compris entre 0,005 et 2 et de préférence entre 0,01 et 0,5, et d est compris entre 0,005 et 2 et de préférence entre 0,01 et 1.

Dans la formule (I) donnée ci-dessus pour définir la composition chimique du solide cristallisé IZM-2 sous sa forme brute de synthèse, la valeur de a est comprise entre 0 et 0,5, très préférentiellement comprise entre 0 et 0,05 et de manière encore plus préférée comprise entre 0,0016 et 0,02. De manière préférée, b est compris entre 0 et 1, de manière très préférée b est compris entre 0 et 0,5 et de manière encore plus préférée b est compris entre 0,005 et 0,5. La valeur de c est comprise entre 0,005 et 2, avantageusement entre 0,01 et 0,5. La valeur prise par d est comprise entre 0,005 et 2, de préférence comprise entre 0,01 et 1.

Sous sa forme brute de synthèse, c'est-à-dire directement issu de la synthèse et préalablement à toute étape de calcination(s) bien connue de l'Homme du métier, ledit solide IZM-2 comporte au moins l'espèce organique R ayant deux atomes d'azote quaternaires telle que celle décrite ci-après ou encore ses produits de décomposition ou encore ses précurseurs. Selon un mode préféré de l'invention, dans la formule (I) donnée ci-dessus, l'élément R est le 1,6-bis(méthylpiperidinium)hexane dont la formule développée est donnée ci-dessous. Ladite espèce organique R, qui joue le rôle de structurant, peut être éliminée par les voies classiques connues de l'état de la technique comme des traitements thermiques et/ou chimiques.

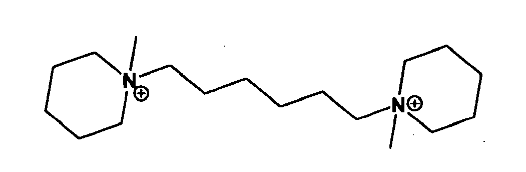

Le solide cristallisé IZM-2 selon l'invention est de préférence un solide zéolithique.

L'invention concerne également un procédé de préparation du solide cristallisé IZM-2 selon l'invention dans lequel on fait réagir un mélange aqueux comportant au moins une source d'au moins un oxyde XO₂, éventuellement au moins une source d'au moins un oxyde Y₂O₃, éventuellement au moins une source d'au moins un métal alcalin et/ou alcalino-terreux de valence n, au moins une espèce organique R comportant deux atomes d'azote quaternaires, le mélange présentant préférentiellement la composition molaire suivante :
- XO₂/Y₂O₃ :: **au moins 2, de préférence au moins 20, de manière plus**
- H₂O/XO₂ :: 1 à 100, de préférence de 10 à 70,
- R/XO₂ :: 0,02 à 2, de préférence de 0,05 à 0,5,
- M_{2/n}O/XO₂ :: 0 à 1, de préférence de 0,005 et 0,5,
où X est un ou plusieurs élément(s) tétravalent(s) choisi(s) dans le groupe formé par les éléments suivants : silicium, germanium, titane, de préférence le silicium, où Y est un ou plusieurs élément(s) trivalent(s) choisi(s) dans le groupe formé par les éléments suivants : aluminium, fer, bore, indium et gallium, de préférence l'aluminium et où M est un ou plusieurs metal(aux) alcalin(s) et/ou alcalino-terreux choisi(s) parmi le lithium, le sodium, le potassium, le calcium, le magnésium et le mélange d'au moins deux de ces métaux de préférence le sodium.

Conformément au procédé selon l'invention, R est une espèce organique ayant deux atomes d'azote quaternaires jouant le rôle de structurant organique. Préférentiellement, R est le composé azoté 1,6-bis(méthylpiperidinium)hexane. Les anions associés aux cations ammoniums quaternaires présents dans l'espèce organique structurante pour la synthèse du solide cristallisé IZM-2 selon l'invention sont choisis parmi l'anion acétate, l'anion sulfate, l'anion carboxylate, l'anion tétrafluoroborate, les anions halogénures tels que le fluorure, le chlorure, le bromure, l'iodure, l'anion hydroxyde et une combinaison de plusieurs d'entre eux. De manière préférée, les anions associés aux cations ammoniums quaternaires présents dans l'espèce structurante pour la synthèse du solide cristallisé IZM-2 sont choisis parmi l'anion hydroxyde et l'anion bromure. Ladite espèce organique azotée utilisée comme agent structurant du solide cristallisé IZM-2 est synthétisée par toute méthode connue de l'Homme du métier. Pour la synthèse du dibromure de 1,6-bis(méthylpiperidinium)hexane, on procède au mélange d'une mole de 1,6-dibromohexane et d'au moins 2 moles de N-méthylpiperidine dans l'éthanol. Généralement, le mélange est porté à reflux pendant une durée comprise entre 3 et 10 heures. Après filtration, précipitation au moyen d'un solvant éthéré tel que le diéthyéther puis recristallisation dans un mélange éthanol/éther, on obtient du dibromure de 1,6-bis(méthylpiperidinium)hexane. Le dihydroxyde de 1,6-bis(méthylpiperidinium)hexane est préférentiellement obtenu par traitement à température ambiante d'une solution aqueuse de dibromure de 1,6-bis(méthylpiperidinium)hexane par de l'oxyde d'argent Ag₂O.

La source de l'élément X, employée pour la mise en oeuvre du procédé de préparation du solide cristallisé IZM-2, peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX AS-40.

La source de l'élément Y, éventuellement employée pour la mise en oeuvre du procédé de préparation du solide cristallisé IZM-2, peut être tout composé comprenant l'élément Y et pouvant libérer cet élément en solution aqueuse sous forme réactive. Dans le cas préféré où Y est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Pour la source de métal M alcalin et/ou alcalino-terreux de valence n, on utilise avantageusement un halogénure ou un hydroxyde dudit métal M, de préférence un hydroxyde dudit métal M.

Pour la mise en oeuvre du procédé de préparation du solide IZM-2 selon l'invention, il est préféré que le mélange aqueux, comportant au moins une source d'au moins un oxyde XO₂, éventuellement au moins une source d'au moins un oxyde Y₂O₃, éventuellement au moins une source d'au moins un métal alcalin et/ou alcalino-terreux de valence n, au moins une espèce organique R ayant deux atomes d'azote quaternaires, comporte également au moins une source d'ions hydroxydes. Ladite source d'ions hydroxydes provient avantageusement de l'espèce organique structurante R lorsqu'elle se trouve sous sa forme hydroxyde, à savoir le dihydroxyde de 1,6-bis(méthylpiperidinium)hexane, ou encore de la source de métal M alcalin et/ou alcalino-terreux lorsqu'il se trouve sous forme hydroxyde, par exemple l'hydroxyde de sodium.

Aussi, selon un mode de réalisation préféré du procédé selon l'invention, on fait réagir un mélange aqueux comportant un oxyde de silicium, éventuellement de l'alumine, du dibromure de 1,6-bis(méthylpiperidinium)hexane et de l'hydroxyde de sodium. Selon un autre mode de réalisation préféré du procédé selon l'invention, on fait réagir un mélange aqueux comportant un oxyde de silicium, éventuellement de l'alumine et du dihydroxyde de 1,6-bis(méthylpiperidinium)hexane.

Le procédé selon l'invention consiste à préparer un mélange réactionnel aqueux appelé gel et renfermant au moins une source d'au moins un oxyde XO₂, éventuellement au moins une source d'au moins un oxyde Y₂O₃, au moins une espèce organique R, éventuellement au moins une source d'au moins un métal alcalin et/ou alcalino-terreux de valence n. Les quantités desdits réactifs sont ajustées de manière à conférer à ce gel une composition permettant sa cristallisation en solide cristallisé IZM-2 sous sa forme brute de synthèse de formule générale (I) XO₂ : aY₂O₃ : bM_{2/n}O : cR : dH₂O, où a, b, c et d répondent aux critères définis plus haut lorsque c et d sont supérieurs à 0. Puis le gel est soumis à un traitement hydrothermal jusqu'à ce que le solide cristallisé IZM-2 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore plus préférée entre 160 et 1.75°C jusqu'à la formation des cristaux de solide IZM-2 sous sa forme brute de synthèse. La durée nécessaire pour obtenir la cristallisation varie généralement entre 1 heure et plusieurs mois en fonction de la composition des réactifs dans le gel, de l'agitation et de la température de réaction. De préférence la durée de cristallisation varie entre 2 heures et 21 jours. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation du solide cristallisé IZM-2 au détriment d'impuretés. De tels germes comprennent des solides cristallisés, notamment des cristaux de solide IZM-2. Les germes cristallins sont généralement ajoutés dans une proportion comprise entre 0,01 et 10 % de la masse de l'oxyde XO₂ utilisée dans le mélange réactionnel.

A l'issue de l'étape de traitement hydrothermal conduisant à la cristallisation du solide IZM-2, la phase solide est filtrée, lavée, séchée puis calcinée. L'étape de calcination s'effectue avantageusement par une ou plusieurs étapes de chauffage réalisée à une température comprise entre 100 et 1000°C, de préférence comprise entre 400 et 650°C, pour une durée comprise entre quelques heures et plusieurs jours, de préférence comprise entre 3 heures et 48 heures. De manière préférée, la calcination s'effectue en deux étapes de chauffage consécutives.

A l'issue de ladite étape de calcination, le solide IZM-2 obtenu est celui présentant le diagramme de diffraction de rayons X incluant au moins les raies inscrites dans le tableau 1. Il est dépourvu d'eau ainsi que de l'espèce organique R présentes dans le solide IZM-2 sous sa forme brute de synthèse.

La présente invention concerne également l'utilisation du solide IZM-2 selon l'invention comme adsorbant pour le contrôle de la pollution ou comme tamis moléculaire pour la séparation.

La présente invention a donc également pour objet un adsorbant comprenant le solide cristallisé IZM-2 selon l'invention. Lorsqu'il est utilisé comme adsorbant, le solide cristallisé IZM-2 selon l'invention est généralement dispersé dans une phase matricielle inorganique qui contient des canaux et des cavités qui permettent l'accès du fluide à séparer au solide cristallisé. Ces matrices sont préférentiellement des oxydes minéraux, par exemple des silices, des alumines, des silice-alumines ou des argiles. La matrice représente de manière générale entre 2 et 25% en masse de l'adsorbant ainsi formé.

L'invention est illustrée par les exemples suivants qui ne présentent, en aucun cas, un caractère limitatif.

### Exemple 1: préparation du dibromure de 1,6-bis(méthylpiperidinium)hexane (structurant A).

50 g de 1,6-dibromohexane (0,20 mole, 99%, Alfa Aesar) sont ajoutés dans un ballon de 1 L contenant 50 g de N-méthylpipéridine (0,51 mole, 99%, alfa Aesar) et 200 ml d'éthanol. Le milieu réactionnel est agité et porté à reflux pendant 5 h. Le mélange est ensuite refroidi à température ambiante puis filtré. Le mélange est versé dans 300 ml de diéthyléther froid puis le précipité formé est filtré et lavé avec 100 ml de diéthyléther. Le solide obtenu est recristallisé dans un mélange éthanol/éther. Le solide obtenu est séché sous vide pendant 12 h. On obtient 71 g d'un solide blanc (soit un rendement de 80 %).

Le produit possède le spectre ¹H RMN attendu. ¹H RMN (D₂O, ppm/TMS) : 1,27 (4H,m) ; 1,48 (4H,m) ; 1,61 (4H,m) ; 1,70 (8H,m); 2,85 (6H,s) ; 3,16 (12H,m).

### Exemple 2: préparation du dihydroxyde de 1,6-bis(méthylpiperidinium)hexane (structurant B).

18,9 g d'Ag₂O (0,08 mole, 99%, Aldrich) sont ajoutés dans un bécher en téflon de 250 ml contenant 30 g du structurant A (0,07 mole) et 100 ml d'eau déionisée. Le milieu réactionnel est agité à l'abri de la lumière pendant 12h. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

### Exemple 3 : préparation d'un solide IZM-2 selon l'invention

20,161 g d'une suspension colloïdale de silice, connue sous le terme commercial Ludox AS-40 commercialisée par Aldrich, est incorporée dans une solution composée de 1,685 g de soude (prolabo), 9,901 g de structurant A et de 68,252 g d'eau déionisée. La composition molaire du mélange est la suivante : SiO₂ ; 0,17 Na₂O ; 0,17 A ; 33,33 H₂O. Le mélange est agité vigoureusement pendant une demi-heure. Le mélange est ensuite transféré, après homogénéisation, dans un autoclave. L'autoclave est chauffé pendant 1 jour à 170°C sous agitation (200 tours/min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2. Le diagramme de diffraction effectué sur le solide IZM-2 calciné est donné par la figure 1.

### Exemple 4 : préparation d'un solide IZM-2 selon l'invention.

20,150 g d'une suspension colloïdale de silice, connue sous le terme commercial Ludox AS-40 commercialisée par Aldrich, est incorporée dans une solution composée de 0,106 g d'aluminate de sodium (carlo erba), 1,634 g de soude (prolabo), 9,896 g de composé A et de 68,215 g d'eau déionisée. La composition molaire du mélange est la suivante : SiO₂ ; 0,004 Al₂O₃ ; 0,17 Na₂O ; 0,17 A ; 33,33 H₂O. Le mélange est agité vigoureusement pendant une demi-heure. Le mélange est ensuite transféré, après homogénéisation, dans un autoclave. L'autoclave est chauffé pendant 6 jours à 170°C sous agitation (200 tours / min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2. Le diagramme de diffraction effectué sur le solide IZM-2 calciné est donné par la figure 1.

### Exemple 5 : préparation d'un solide IZM-2 selon l'invention.

20,115 g d'une suspension colloïdale de silice, connue sous le terme commercial Ludox AS-40 commercialisée par Aldrich, est incorporée dans une solution composée de 0,422 g d'aluminate de sodium (carlo erba), 1,48 g de soude (prolabo), 9,879 g de composé A et de 68,104 g d'eau déionisée. La composition molaire du mélange est la suivante : SiO₂ ; 0,017 Al₂O₃ ; 0,17 Na₂O ; 0,17 A ; 33,33 H₂O. Le mélange est agité vigoureusement pendant une demi-heure. Le mélange est ensuite transféré, après homogénéisation, dans un autoclave. L'autoclave est chauffé pendant 8 jours à 170°C sous agitation (200 tours / min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2. Le diagramme de diffraction effectué sur le solide IZM-2 calciné est donné par la figure 1.

### Exemple 6 : préparation d'un solide IZM-2 selon l'invention.

21,048 g d'une suspension colloïdale de silice, connue sous le terme commercial Ludox AS-40 commercialisée par Aldrich, est incorporée dans une solution composée de 30,843 g d'une solution aqueuse de structurant B à 23,96 % massique et de 48,109 g d'eau déionisée. La composition molaire du mélange est la suivante : SiO₂ ; 0,17 B ; 33,33 H₂O. Le mélange est agité vigoureusement pendant une demi-heure. Le mélange est ensuite transféré, après homogénéisation, dans un autoclave. L'autoclave est chauffé pendant 10 jours à 170°C sous agitation (200 tours/min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2. Le diagramme de diffraction effectué sur le solide IZM-2 calciné est donné par la figure 1.

### Exemple 7 : préparation d'un solide IZM-2 selon l'invention.

21,035 g d'une suspension colloïdal de silice, connue sous le terme commercial Ludox AS-40 commercialisée par Aldrich, est incorporée dans une solution composée de 30,825 g d'une solution aqueuse de structurant B à 23,96 % massique, de 0,091 g d'hydroxyde d'aluminum (Aldrich) et de 48,049 g d'eau déionisée. La composition molaire du mélange est la suivante : SiO₂ ; 0,004 Al₂O₃ ; 0,17 B ; 33,33 H₂O. Le mélange est agité vigoureusement pendant une demi-heure. Le mélange est ensuite transféré, après homogénéisation, dans un autoclave. L'autoclave est chauffé pendant 15 jours à 170°C sous agitation (200 tours / min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2. Le diagramme de diffraction effectué sur le solide IZM-2 calciné est donné par la figure 1.

### Exemple 8 : préparation d'un solide IZM-2 selon l'invention.

20,998 g d'une suspension colloïdale de silice, connue sous le terme commercial Ludox AS-40 commercialisée par Aldrich, est incorporée dans une solution composé de 30,770 g d'une solution aqueuse de structurant B à 23,96 % massique, de 0,364 g d'hydroxyde d'aluminum (Aldrich) et de 47,868 g d'eau déionisée. La composition molaire du mélange est la suivante : SiO₂ ; 0,017 Al₂O₃ ; 0,17 B ; 33,33 H₂O. Le mélange est agité vigoureusement pendant une demi-heure. Le mélange est ensuite transféré, après homogénéisation, dans un autoclave. L'autoclave est chauffé pendant 21 jours à 170°C sous agitation (200 tours / min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2. Le diagramme de diffraction effectué sur le solide IZM-2 calciné est donné par la figure 1.

### Exemple 9 : préparation d'un adsorbant comprenant le solide IZM-2

Le solide calciné de l'exemple 3 est mis sous forme d'extrudés par malaxage avec de la boemite (Pural SB3, Sasol) dans un malaxeur à bras en Z et extrusion de la pâte obtenue avec une extrudeuse piston. Les extrudés sont alors séchés à 120°C pendant 12 heures sous air et calcinés à 550°C pendant 2 heures sous flux d'air dans un four à moule.

L'adsorbant ainsi préparé est composé de 80% du solide zéolithique IZM-2 et de 20 % d'alumine.

## Revendications

1. Solide cristallisé IZM-2 présentant un diagramme de diffraction des rayons X incluant au moins les raies inscrites dans le tableau ci-dessous:
| 2 thêta (°) | dₕₖₗ (Å) | Irel | 2 thêta (°) | dₕₖₗ (Å) | Irel |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4.17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |
où FF = très fort ; F = fort ; m = moyen ; mf = moyen faible ; f = faible ; ff = très faible et présentant une composition chimique, exprimée sur une base anhydre, en termes de moles d'oxydes, par la formule générale suivante : XO₂ : aY₂O₃ : bM_{2/n}O dans laquelle X représente au moins un élément tétravalent, Y représente au moins un élément trivalent et M est au moins un métal alcalin et/ou un métal alcalino-terreux de valence n, a et b représentant respectivement le nombre de moles de Y₂O₃ et M_{2/n}O et a est compris entre 0 et 0,5 et b est compris entre 0 et 1.

2. Solide cristallisé IZM-2 selon la revendication 1 dans lequel X est le silicium.

3. Solide cristallisé IZM-2 selon la revendication 1 ou la revendication 2 dans lequel Y est l'aluminium.

4. Solide cristallisé IZM-2 selon l'une des revendications 1 à 3 dans lequel a est compris entre 0,0016 et 0,02 et b est compris entre 0,005 et 0,5,

5. Procédé de préparation d'un solide cristallisé IZM-2 selon l'une des revendications 1 à 4 comprenant le mélange en milieu aqueux d'au moins une source d'au moins un oxyde XO₂, éventuellement d'au moins une source d'au moins un oxyde Y₂O₃, éventuellement d'au moins une source d'au moins un métal alcalin et/ou alcalino-terreux de valence n, au moins une espèce organique R comportant deux atomes d'azote quaternaires formée par le 1,6-bis(méthylpiperidinium)hexane, puis le traitement hydrothermal dudit mélange jusqu'à ce que ledit solide cristallisé IZM-2 se forme, suivi des étapes de filtration, de lavage, de séchage et de calcination.

6. Procédé de préparation d'un solide cristallisé IZM-2 selon la revendication 5 tel que la composition molaire du mélange réactionnel est telle que :
XO₂/Y₂O₃ : au moins 2,
H₂O/XO₂ : 1 à 100,
R/XO₂ : 0,02 à 2,
M_{2/n}O/XO₂ : 0 à 1.

7. Utilisation du solide cristallisé IZM-2 selon l'une des revendications 1 à 4 ou préparé selon le procédé de la revendication 5 ou de la revendication 6 comme adsorbant.

## Claims

1. An IZM-2 crystalline solid with an X ray diffraction diagram including at least the peaks set out in the table below:
| 2 theta (°) | dₕₖₗ (Å) | Irel | 2 theta (°) | dₕₖₗ (Å) | Irel |
|---|---|---|---|---|---|
| 5.07 | 17.43 | Vw | 19.01 | 4.66 | Vw |
| 7.36 | 12.01 | Vs | 19.52 | 4.54 | Vw |
| 7.67 | 11.52 | Vs | 21.29 | 4.17 | M |
| 8.78 | 10.07 | S | 22.44 | 3.96 | W |
| 10.02 | 8.82 | Vw | 23.10 | 3.85 | Mw |
| 12.13 | 7.29 | Vw | 23.57 | 3.77 | W |
| 14.76 | 6.00 | Vw | 24.65 | 3.61 | Vw |
| 15.31 | 5.78 | Vw | 26.78 | 3.33 | W |
| 15.62 | 5.67 | Vw | 29.33 | 3.04 | Vw |
| 16.03 | 5.52 | Vw | 33.06 | 2.71 | Vw |
| 17.60 | 5.03 | Vw | 36.82 | 2.44 | Vw |
| 18.22 | 4.87 | Vw | 44.54 | 2.03 | Vw |
in which: Vs = very strong; S = strong; M = medium; Mw = medium weak; W = weak; Vw = very weak, and having a chemical composition, expressed as the anhydrous base in terms of moles of oxides, defined by the following general formula: XO₂: aY₂O₃: bM_{2/n}O, in which X represents at least one tetravalent element, Y represents at least one trivalent element and M is at least one alkali metal and/or an alkaline-earth metal with valency n, a and b respectively representing the number of moles of Y₂O₃ and M_{2/n}O; a is in the range 0 to 0.5 and b is in the range 0 to 1.

2. An IZM-2 crystalline solid according to claim 1, in which X is silicon.

3. An IZM-2 crystalline solid according to claim 1 or claim 2, in which Y is aluminium.

4. An IZM-2 crystalline solid according to one of claims 1 to 3, in which a is in the range 0.0016 to 0.02 and b is in the range 0.005 to 0.5.

5. A process for preparing an IZM-2 crystalline solid according to one of claims 1 to 4, comprising mixing in an aqueous medium at least one source of at least one oxide XO₂, optionally at least one source of at least one oxide Y₂O3, optionally at least one source of at least one alkali and/or alkaline-earth metal with valency n, and at least one organic species R comprising two quaternary nitrogen atoms formed by 1,6-bis(methylpiperidinium)hexane, then carrying out hydrothermal treatment of said mixture until said IZM-2 crystalline solid forms, followed by filtration, washing, drying and calcining steps.

6. A process for preparing an IZM-2 crystalline solid according to claim 5, in which the molar composition of the reaction mixture is such that:
XO₂/Y₂O₃ at least 2;
H₂O/XO₂ 1 to 100;
R/XO₂ 0.02 to 2;
M_{2/n}O/XO₂ 0 to 1.

7. Use, as an adsorbant, of an IZM-2 crystalline solid according to one of claims 1 to 4 or prepared in accordance with one of claims 5 to 6.

## Patentansprüche

1. Kristallisierter Feststoff IZM-2, der ein Röntgenbeugungsdiagramm aufweist, welches mindestens die Signale umfasst, die in der untenstehenden Tabelle aufgeführt sind:
| 2 Theta(°) | dₕₖₗ (Å) | Irel | 2 Theta(°) | dₕₖₗ (Å) | Irel |
|---|---|---|---|---|---|
| 5,07 | 17,43 | SS | 19,01 | 4,66 | ss |
| 7,36 | 12,01 | SS | 19,52 | 4,54 | SS |
| 7,67 | 11,52 | SS | 21,29 | 4,17 | m |
| 8,78 | 10,07 | S | 22,44 | 3,96 | s |
| 10,02 | 8,82 | SS | 23,10 | 3,85 | ms |
| 12,13 | 7,29 | SS | 23,57 | 3,77 | s |
| 14,76 | 6,00 | SS | 24,65 | 3,61 | ss |
| 15,31 | 5,78 | SS | 26,78 | 3,33 | s |
| 15,62 | 5,67 | SS | 29,33 | 3,04 | ss |
| 16,03 | 5,52 | SS | 33,06 | 2,71 | ss |
| 17,60 | 5,03 | SS | 36,82 | 2,44 | ss |
| 18,22 | 4,87 | SS | 44,54 | 2,03 | ss |
wobei SS sehr stark; S stark; m = mittel; ms = mittelschwach; s = schwach; SS = sehr schwach ist und wobei er eine chemische Zusammensetzung aufweist, die auf einer wasserfreien Basis, in Mol an Oxiden, durch die folgende allgemeine Formel ausgedrückt wird: XO₂ : aY₂O₃ bM_{2/n}O, wobei X mindestens ein vierwertiges Element darstellt, Y mindestens ein dreiwertiges Element darstellt und M mindestens ein Alkalimetall und/oder Erdalkalimetall der Wertigkeit n ist, a und b die Anzahl der Mole an Y₂O₃ beziehungsweise M_{2/n}O darstellt und a im Bereich von 0 bis 0,5 liegt und b im Bereich von 0 bis 1 liegt.

2. Kristallisierter Feststoff IZM-2 nach Anspruch 1, wobei X Silicium ist.

3. Kristallisierter Feststoff IZM-2 nach Anspruch 1 oder Anspruch 2, wobei Y Aluminium ist.

4. Kristallisierter Feststoff IZM-2 nach einem der Ansprüche 1 bis 3, wobei a im Bereich von 0,0016 und 0,02 liegt und b im Bereich von 0,005 und 0,5 liegt.

5. Verfahren zur Herstellung eines kristallinen Feststoffs IZM-2 nach einem der Ansprüche 1 bis 4, welches das Mischen in wässrigem Milieu mindestens einer Quelle mindestens eines Oxids XO₂, möglicherweise mindestens einer Quelle mindestens eines Oxids Y₂O₃, möglicherweise mindestens eine Quelle mindestens eines Alkali- und/oder Erdalkalimetalls der Wertigkeit n, mindestens einer organischen Spezies R, die zwei quartäre Stickstoffatome aufweist und von 1,6-bis(Methylpiperidinium)hexan gebildet wird, umfasst, woraufhin diese Mischung eine hydrothermale Behandlung erfährt, bis sich der kristallisierte Feststoff IZM-2 bildet, gefolgt von Schritten der Filtration, des Waschens, des Trocknens und des Kalzinierens.

6. Verfahren zur Herstellung eines kristallisierten Feststoffs IZM-2 nach Anspruch 5, sodass die molare Zusammensetzung der Reaktionsmischung folgendermaßen ist:
XO₂N₂O₃ : mindestens 2,
H₂O/XO₂ : 1 bis 100,
R/XO₂ : 0,02 bis 2,
M_{2/n}O/XO₂ : 0 à 1.

7. Verwendung des kristallisierten Feststoffs IZM-2 nach einem der Ansprüche 1 bis 4 oder hergestellt nach dem Verfahren des Anspruchs 5 oder des Anspruchs 6 als Adsorptionsmittel.
